# FASCICULE DE BREVET EUROPEEN

(11) **EP 2 927 730 B1**
(45) Date de publication et mention de la délivrance du brevet: **11.03.2020**
(21) Numéro de dépôt: 15161580.4
(22) Date de dépôt: 30.03.2015
(51) Int. Cl.: G02B 27/09, G06K 9/00, G06K 9/20

(54) **Ensemble d'acquisition d'images biometriques a filtre de compensation**
ERFASSUNGSEINHEIT FÜR BIOMETRISCHE BILDER MIT EINEM KOMPENSATIONSFILTER
BIOMETRIC IMAGE ACQUISITION ASSEMBLY WITH COMPENSATION FILTER

(30) Priorité: 31.03.2014 FR 1452802
(43) Date de publication de la demande: 07.10.2015
(73) Titulaire: Idemia Identity & Security France, 92400 Courbevoie (FR)
(72) Inventeur: Peyronneaud, Benjamin, 92130 ISSY LES MOULINEAUX (FR); Guillemot, Florence, 92130 ISSY LES MOULINEAUX (FR)
(74) Mandataire: Regimbeau

(56) Documents cités:
- WO-A2-2007/120559
- JP-A- 2009 098 089
- US-A- 5 539 441
- US-A1- 2002 021 511
- US-A1- 2004 037 450
- US-A1- 2008 025 579
- US-A1- 2012 134 547
- Precision Optics Gera: "POG - Customized Microstructures - Variable ND-Filters", , 13 mars 2015 (2015-03-13), XP055205747, Extrait de l'Internet: URL:http://www.pog.eu/en/ms/cms-variable-n d-filters.html [extrait le 2015-07-31]

## Description

### DOMAINE TECHNIQUE DE L'INVENTION

La présente invention se rapporte à l'acquisition d'images biométriques. Plus particulièrement, elle propose un ensemble d'acquisition d'images biométriques comprenant un système d'éclairage pour la projection lumineuse sur une partie cible d'un individu, notamment dans le cadre d'un procédé d'analyse d'image basé sur l'analyse de l'intensité lumineuse. C'est notamment le cas par exemple pour les systèmes anti-fraude prévus pour détecter si un visage est vrai ou faux.

Un tel ensemble comprend classiquement
- une source lumineuse configurée pour émettre un faisceau lumineux vers une partie cible d'un individu dans une direction d'éclairage,
- un dispositif d'acquisition d'image configuré pour acquérir des images de la partie cible éclairée par le système d'éclairage,
- des moyens de traitement comprenant un processeur pour analyser les images sur la base de l'intensité lumineuse desdites images.

Les demandes de brevet n° FR13-55428 et n° FR13-54953 présentent de tels ensembles prévus pour décider si une biométrie est vraie ou fausse. Ils comprennent des moyens d'éclairage émettant un flux lumineux incident en vue respectivement d'une analyse des tavelures (« spekles » en anglais) ou d'une analyse de la FTM (fonction de modulation de fréquence) à partir de l'intensité des niveaux de gris de l'image monochromatique acquise.

Cependant, même dans le cas où les moyens d'éclairage sont constitués par un laser, le faisceau lumineux émis par le laser n'est pas spatialement homogène, et présente sur un plan traversé par la direction d'éclairage une distribution spatiale de son intensité non homogène, et qui n'est pas forcément radialement linéairement décroissante à partir du centre du faisceau. De fait, chaque laser présente des distributions d'intensité lumineuse qui lui sont propres.

Dans la mesure où comme expliqué plus haut, certaines analyses d'images sont basées sur l'analyse de l'intensité des images éclairées par une telle source lumineuse, il est nécessaire de corriger cette distribution spatiale d'intensité lumineuse pour améliorer la qualité de l'image au moment même de la capture de celle-ci et minimiser toute éventuelle étape ultérieure de traitement d'image.

En effet, certains de ces procédés prévoient une correction logicielle appliquée sur l'image acquise pour corriger les distributions d'intensité lumineuse du faisceau lumineux utilisé pour éclairer la partie cible, par exemple le visage. Cependant, une telle correction logicielle nécessite la connaissance des caractéristiques du faisceau lumineux tels que sa divergence, définie comme le demi angle au sommet du cône de lumière émis par laser, qui peuvent être déterminé par des mesures, mais également des caractéristiques propres à la partie cible, et notamment sa distance par rapport à la source lumineuse.

Or, cette dernière information n'est souvent pas disponible ou est difficile à obtenir, voire n'est pas possible à déterminer de façon fiable. Par exemple, dans un sas biométrique du type de ceux des points de contrôle aéroportuaire, dans lequel les individus sont en mouvement, la distance d'un individu à la source lumineuse et aux moyens d'acquisition d'image varie en fonction de la position de l'individu dans le sas au moment de la capture de l'image biométrique. Or, cette position n'étant pas connue avec précision, la distance n'est pas non plus connue et il n'est pas possible d'appliquer la correction logicielle adéquate.

En outre, au moment de la capture de l'image biométrique, la position de la cible dans le champ d'acquisition varie d'un individu à l'autre en hauteur, en fonction de la taille de l'individu, et/ou en largeur en fonction de sa position latérale dans la zone d'acquisition, ou en raison du relief particulier de la cible, Enfin, dans le cas d'un visage vu de face par exemple, la distance à la source lumineuse de l'arête du nez est plus faible que celle des oreilles par exemple. Il n'est donc alors pas possible de déterminer correctement la distance de la partie cible par rapport à la source lumineuse.

Ainsi, la distribution non homogène de l'intensité lumineuse du faisceau lumineux ne peut pas toujours être aisément et correctement corrigée a posteriori sur l'image acquise de la partie cible d'un individu. Il en résulte que ces procédés d'analyse d'image ne fonctionnent pas de façon optimale et voient leurs performances se dégrader en fonction de la position de la partie cible.

### PRESENTATION DE L'INVENTION

L'invention a pour but de remédier au moins en partie à ces inconvénients et préférentiellement à tous. A cet effet, il est proposé un ensemble d'acquisition d'images biométriques comprenant un système d'éclairage pour la projection lumineuse sur une partie cible d'un individu, ledit système d'éclairage comprenant une source lumineuse configurée pour émettre un faisceau lumineux vers la partie cible dans une direction d'éclairage, ledit faisceau lumineux présentant une distribution spatiale de son intensité lumineuse, le système d'éclairage comprenant un filtre de compensation disposé dans la direction d'éclairage et adapté pour compenser la distribution spatiale de l'intensité lumineuse émise par la source lumineuse à destination de la partie cible, dans lequel le filtre de compensation présente une transparence avec une distribution spatiale inversée par rapport à la distribution spatiale de l'intensité lumineuse au niveau du faisceau lumineux émis par la source lumineuse, de sorte que l'intensité du faisceau lumineux soit homogénéisée par son passage par le filtre de compensation. Par acquisition d'image biométrique on entend toute acquisition d'image destinée à l'authentification, à l'identification d'un individu ou à la détection d'une fraude biométrique.

L'inhomogénéité de la distribution d'intensité lumineuse du faisceau émis par la source lumineuse est ainsi corrigée avant que la lumière n'atteigne la partie cible. De la sorte, la correction de la distribution spatiale de l'intensité lumineuse n'est pas dépendante de la position ou de de la distance de la partie cible, comme c'est le cas dans une correction logicielle a posteriori.

L'ensemble est avantageusement complété par les caractéristiques suivantes, prises seules ou en quelconque de leurs combinaisons techniquement possibles:
- la distribution spatiale de la transparence du filtre de compensation est réalisée au moyen d'un motif de teintes modifiant la transparence du filtre de compensation ;
- le motif de teintes du filtre de compensation est gravé par photolithographie ;
- la source lumineuse est une source monochromatique notamment dans le visible ou l'infrarouge
- la source lumineuse est cohérente (type laser) ou non cohérente (type diode électroluminescente) ;
- le système comprend en outre :
   - un dispositif d'acquisition d'image configuré pour acquérir des images d'une cible éclairée par le système d'éclairage, et
   - des moyens de traitement comprenant un processeur pour analyser les images sur la base de l'intensité lumineuse desdites images.

Il est également proposé un procédé de fabrication d'un ensemble d'acquisition d'images biométriques comprenant un système d'éclairage pour la projection lumineuse sur une partie cible d'un individu, ledit système d'éclairage comprenant une source lumineuse configurée pour émettre un faisceau lumineux vers la partie cible dans une direction d'éclairage, comprenant les étapes selon lesquelles :
- on détermine la distribution spatiale de l'intensité lumineuse au niveau d'un plan traversé par le faisceau lumineux,
- on détermine une distribution spatiale de la transparence inverse de la distribution spatiale de l'intensité lumineuse et on fabrique un filtre de compensation présentant cette distribution spatiale de transparence et,
- on dispose le filtre de compensation dans la direction d'éclairage au niveau du plan par rapport à la source lumineuse.

### PRESENTATION DES FIGURES

L'invention sera mieux comprise, grâce à la description ci-après, qui se rapporte à des modes de réalisations et des variantes selon la présente invention, donnés à titre d'exemples non limitatifs et expliqués avec référence aux dessins schématiques annexés, dans lesquels:
- la figure 1 illustre schématiquement un ensemble d'acquisition d'images comprenant un système d'éclairage selon un mode de réalisation possible de l'invention ;
- les figures 2a et 2b présentent respectivement des exemples de distribution spatiale de l'intensité lumineuse au niveau du plan du faisceau lumineux émis par la source lumineuse et de distribution spatiale de la transparence du filtre de compensation ;
- la figure 3 illustre schématiquement des étapes du procédé de fabrication d'un système d'éclairage selon un mode de réalisation possible de l'invention.

### DESCRIPTION DETAILLEE

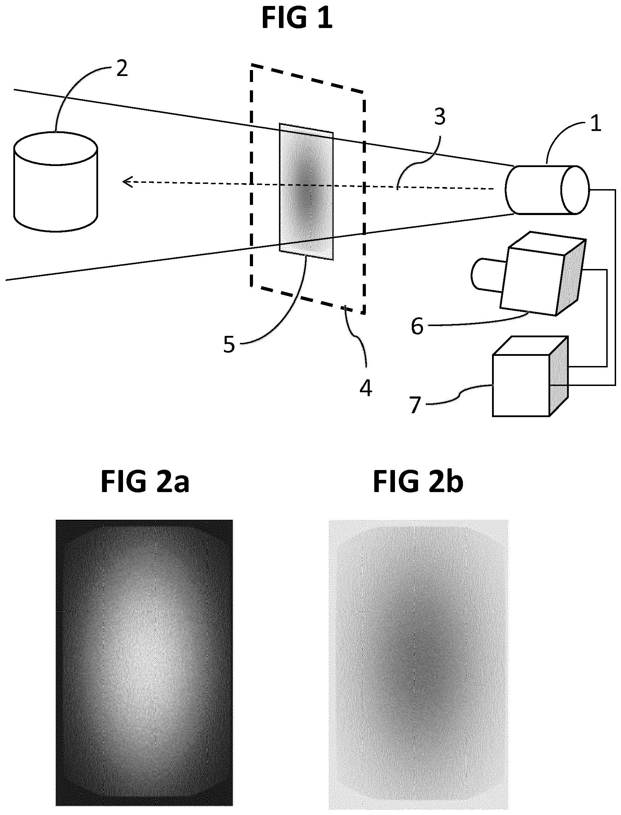

En référence à la figure 1, un ensemble d'acquisition d'images biométriques comprend un système d'éclairage pour la projection lumineuse sur une partie cible 2 d'un individu, ledit système d'éclairage comprenant une source lumineuse 1 configurée pour émettre un faisceau lumineux vers la partie cible 2 dans une direction d'éclairage 3. De préférence, la source lumineuse 1 est une source monochromatique cohérente, par exemple un laser ou une diode laser. Dans un mode de réalisation préféré, la source lumineuse 1 émet uniquement dans l'infra-rouge. La partie cible 2 peut être une partie du corps d'un individu en particulier le visage d'un individu, un iris ou bien encore une paume ou un doigt d'un individu, en fonction du procédé biométrique à mettre en œuvre.

L'ensemble comprend également un dispositif d'acquisition d'image 6 configuré pour acquérir des images d'une partie cible 2 d'un individu éclairée par le système d'éclairage, et des moyens de traitement 7 comprenant un processeur pour analyser les images sur la base de l'intensité lumineuse desdites images.

Comme tout faisceau, le faisceau lumineux présente une distribution spatiale de son intensité lumineuse qui n'est pas homogène. En particulier, le faisceau lumineux présente une certaine distribution spatiale au niveau d'un plan 4 traversé par la direction d'éclairage 3, dont un exemple est illustré par la figure 2a. Sur cette figure 2a, on constate que la distribution spatiale d'intensité lumineuse sur le plan 4 n'est pas homogène, et que l'intensité ne décroît pas linéairement avec la distance au centre du faisceau lumineux.

Afin d'homogénéiser la distribution spatiale de l'intensité lumineuse du faisceau lumineux, un filtre de compensation 5 adapté pour compenser la distribution spatiale de l'intensité lumineuse émise par la source lumineuse 1 à destination de la partie cible 2 est disposé dans la direction d'éclairage 3.

Ce filtre de compensation 5 présente une transparence avec une distribution spatiale inversée par rapport à la distribution spatiale de l'intensité lumineuse du faisceau lumineux émis par la source lumineuse 1, de sorte que l'intensité du faisceau lumineux soit homogénéisée par son passage par le filtre de compensation 5. Cette distribution de la transparence du filtre de compensation 5 permet de conserver une bonne directivité du faisceau de lumière, ainsi que de limiter la baisse d'intensité au zones de plus fortes intensités.

La distribution spatiale de la transparence du filtre de compensation 5 est réalisée au moyen d'un motif de teintes modifiant la transparence du filtre de compensation 5. La transparence se définit comme un cas particulier de transmittance appliquée à l'optique, et correspond ici, en un point donné, à la fraction du faisceau lumineux traversant le filtre, le reste du faisceau lumineux étant absorbé ou réfléchi. La transparence s'entend dans la plage de longueur d'onde d'émission de la source lumineuse 1.

Ce motif de teinte peut être gravé, notamment par photolithographie, sur le filtre de compensation 5. La figure 2b montre un exemple de filtre de compensation 5 présentant un motif de teintes dont la distribution spatiale de la transparence correspond à l'inverse de la distribution spatiale de l'intensité lumineuse du faisceau lumineux émis par la source lumineuse illustré par l'exemple de la figure 2a.

Comme on peut voir sur ces figures 2a et 2b, à un point clair sur la figure 2a, correspondant à une intensité lumineuse élevée, correspond un point sombre sur la figure 2b, signifiant une faible transparence. A l'inverse, à un point sombre sur la figure 2a, correspondant à une intensité lumineuse faible, correspond un point clair sur la figure 2b, signifiant une transparence élevée.

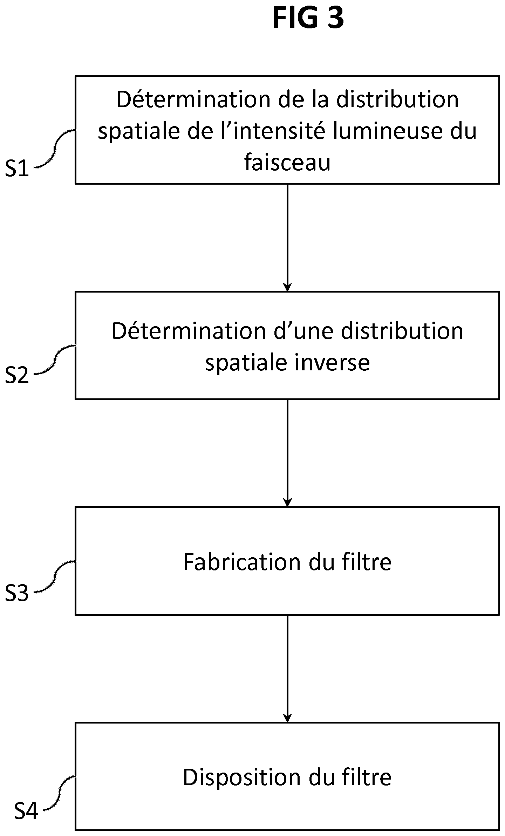

En référence à la figure 3, le procédé de fabrication d'un système d'éclairage comme décrit précédemment comprend une première étape S2 au cours de laquelle on détermine (étape S2) la distribution spatiale de l'intensité lumineuse au niveau d'un plan 4 traversé par le faisceau lumineux. Cette distribution spatiale de l'intensité lumineuse du faisceau lumineux émis au niveau du plan 4 peut être déterminée par simulation, à partir de caractéristiques connues de la source lumineuse 1 telles que la largeur du faisceau ou la divergence, définie comme le demi-angle au sommet du cône de lumière émis par le laser.

On peut également déterminer la distribution spatiale de l'intensité lumineuse du faisceau lumineux émis au niveau du plan 4, ou des caractéristiques du faisceau en permettant la simulation, par la mesure au moyen d'un dispositif d'acquisition d'image placé dans un plan traversé par la direction d'éclairage 3 par rapport à la source lumineuse 1. Par exemple, dans le cas d'un laser ou d'une diode laser, on peut utiliser un profileur de faisceau laser (en anglais « laser beam profiler ») pour déterminer un profil de faisceau correspondant à la distribution spatiale d'intensité du faisceau sur le plan 4.

Cependant, tandis que la mesure directe nécessite l'accessibilité à la mesure du plan 4 dans lequel devra être disposé le filtre de compensation 5, la simulation permet de fabriquer un filtre de compensation 5 destiné à être disposé dans un plan 4 donné au niveau duquel il n'est pas possible de déterminer directement par mesure la distribution spatiale de l'intensité lumineuse du faisceau, par exemple parce que ce plan 4 n'est pas accessible à la mesure. C'est typiquement le cas quand le filtre de compensation est confondu avec une optique de la source lumineuse 1, par exemple un objectif portant une mire.

S'il est nécessaire d'obtenir des caractéristiques du faisceau, on peut par exemple procéder à des mesures de caractéristiques du faisceau dans un autre plan traversé par la direction d'éclairage 3, et on simule à partir de ces caractéristiques la distribution spatiale de l'intensité lumineuse du faisceau au niveau du plan 4 donné.

Dans une deuxième étape, on détermine une distribution spatiale de la transparence inverse de la distribution spatiale de l'intensité lumineuse du faisceau lumineux. Dans le cas d'une image en teinte de gris représentative de la distribution de l'intensité lumineuse comme la figure 2a, le principe général est d'inverser les teintes de gris, i.e. les points foncés deviennent clairs et vice-versa. Il est préférable cependant de garder un niveau de transparence globale suffisant pour ne pas trop atténuer le faisceau lumineux. De fait, des inversions plus complexes peuvent être utilisées. Il est également possible d'augmenter la puissance lumineuse de la source pour compenser l'atténuation due à la présence du filtre de compensation.

On fabrique ensuite un filtre de compensation 5 présentant la distribution spatiale de transparence ainsi déterminée, par exemple par la réalisation d'un motif de teintes modifiant la transparence du filtre de compensation 5, par exemple par gravure par photolithographie du motif sur un support transparent constituant la base du filtre de compensation 5, typiquement en verre ou en matière plastique (en particulier type pellicule photo en gélatine).

Il est à noter que le motif de teintes peut être réalisé directement sur une optique de la source lumineuse 1, par exemple en complément d'une mire utilisée dans un procédé biométrique de détection de fraude ou d'authentification ou d'identification d'un individu basé sur l'analyse de l'intensité lumineuse.

Enfin, on dispose (étape S4) le filtre de compensation 5 dans la direction d'éclairage 3 au niveau du plan 4 par rapport à la source lumineuse 1.

La présence du filtre de compensation 5 permet de d'éclairer la partie cible 2 de l'individu avec un faisceau lumineux dont l'intensité lumineuse est plus homogène, améliorant l'analyse des images qui peuvent en être faite.

Il est donc également proposé une utilisation d'un ensemble d'acquisition d'images biométriques comme décrit ci-dessus pour un procédé biométrique de détection de fraude ou d'authentification ou d'identification d'un individu dans lequel
- on éclaire une partie cible 2 d'un individu au moyen du système d'éclairage,
- on acquiert une image de ladite partie cible 2 ainsi éclairée,
- on analyse l'image pour authentifier l'individu.

Le procédé biométrique peut correspondre à un procédé de détection de fraude, d'authentification ou d'identification pour la reconnaissance d'un visage, d'un iris, d'une paume, d'une empreinte digitale ou de réseaux veineux sous-cutanés d'un individu. Notamment, le procédé peut être basé sur la distribution d'une intensité lumineuse. De manière préférentielle, le procédé correspond à un procédé de détection anti-fraude utilisant un système de projection de mire en infra-rouge par un laser sur le visage d'un individu. La détection d'anti-fraude repose notamment sur l'intensité lumineuse via le calcul de contraste au niveau des lignes de la mire projetée. Le contraste varie en fonction de l'absorption de l'infra-rouge par le matériau rencontré, ce qui permet de différencier la peau humaine d'un masque qui serait présenté pour frauder le système. L'utilisation du filtre de compensation 5 permet d'améliorer ce procédé biométrique de détection de fraude ou d'authentification ou d'identification d'un individu.

L'invention n'est pas limitée au mode de réalisation décrit et représenté aux figures annexées. Des modifications restent possibles, notamment du point de vue de la constitution des divers éléments ou par substitution d'équivalents techniques, sans sortir pour autant du domaine de protection de l'invention.

## Revendications

1. Ensemble d'acquisition d'images biométriques comprenant :
- un système d'éclairage pour une projection lumineuse sur une partie cible (2) d'un individu, ledit système d'éclairage comprenant une source lumineuse (1) configurée pour émettre un faisceau lumineux vers la partie cible (2) dans une direction d'éclairage, ledit faisceau lumineux présentant une distribution spatiale de son intensité lumineuse,
- un capteur d'image (6) configuré pour acquérir des images d'une cible éclairée par le système d'éclairage,
- des moyens de traitement (7) comprenant un processeur pour analyser les images,
**caractérisé en ce que** le système d'éclairage comprend un filtre de compensation (5) disposé dans la direction d'éclairage (3) et adapté pour compenser la distribution spatiale de l'intensité lumineuse émise par la source lumineuse (1) à destination de la partie cible (2) dans lequel le filtre de compensation (5) présente une transparence avec une distribution spatiale inversée par rapport à la distribution spatiale de l'intensité lumineuse au niveau du faisceau lumineux émis par la source lumineuse (1), de sorte que l'intensité du faisceau lumineux soit homogénéisée par son passage par le filtre de compensation (5).

2. Ensemble selon la revendication précédente, dans lequel la distribution spatiale de la transparence du filtre de compensation (5) est réalisée au moyen d'un motif de teintes modifiant la transparence du filtre de compensation (5).

3. Ensemble selon la revendication précédente, dans lequel le motif de teintes du filtre de compensation (5) est gravé par photolithographie.

4. Ensemble selon l'une des revendications précédentes, dans lequel la source lumineuse (1) est une source monochromatique cohérente ou non cohérente.

5. Utilisation d'un ensemble selon l'une quelconque des revendications 1 à 4 pour un procédé biométrique de détection de fraude ou d'authentification ou d'identification d'un individu, dans lequel :
- on éclaire une partie cible (2) d'un individu au moyen du système d'éclairage,
- on acquiert une image de ladite partie cible (2) ainsi éclairée,
- on analyse l'image pour authentifier l'individu.

## Patentansprüche

1. Anordnung zur Erfassung von biometrischen Bildern, umfassend:
- ein Beleuchtungssystem für eine Lichtprojektion auf einen Zielabschnitt (2) einer Person, wobei das Beleuchtungssystem eine Lichtquelle (1) umfasst, die dafür konfiguriert ist, einen Lichtstrahl in einer Beleuchtungsrichtung zum Zielabschnitt (2) hin zu emittieren, wobei der Lichtstrahl eine räumliche Verteilung seiner Lichtintensität aufweist,
- einen Bildsensor (6), der dafür konfiguriert ist, Bilder von einem durch das Beleuchtungssystem beleuchteten Ziel zu erfassen,
- Verarbeitungsmittel (7), die einen Prozessor umfassen, um die Bilder zu analysieren,
**dadurch gekennzeichnet, dass** das Beleuchtungssystem ein Kompensationsfilter (5) umfasst, das in der Beleuchtungsrichtung (3) angeordnet und dafür geeignet ist, die räumliche Verteilung der von der Lichtquelle (1) auf den Zielabschnitt (2) emittierten Lichtintensität zu kompensieren, wobei das Kompensationsfilter (5) eine Transparenz mit einer im Verhältnis zur räumlichen Verteilung der Lichtintensität im Bereich des von der Lichtquelle (1) emittierten Lichtstrahls umgekehrten räumlichen Verteilung aufweist, sodass die Intensität des Lichtstrahls durch sein Durchlaufen des Kompensationsfilters (5) homogenisiert wird.

2. Anordnung nach dem vorstehenden Anspruch, wobei die räumliche Verteilung der Transparenz des Kompensationsfilters (5) mittels eines Farbtonmusters ausgeführt wird, das die Transparenz des Kompensationsfilters (5) modifiziert.

3. Anordnung nach dem vorstehenden Anspruch, wobei das Farbtonmuster des Kompensationsfilters (5) durch Fotolithografie geätzt wird.

4. Anordnung nach einem der vorstehenden Ansprüche, wobei die Lichtquelle (1) eine kohärente oder nicht kohärente monochromatische Quelle ist.

5. Verwendung einer Anordnung nach einem der Ansprüche 1 bis 4 für ein biometrisches Verfahren zur Betrugserkennung oder zur Authentifizierung oder Identifizierung einer Person, wobei:
- ein Zielabschnitt (2) einer Person mittels des Beleuchtungssystems beleuchtet wird,
- ein Bild des so beleuchteten Zielabschnitts (2) erfasst wird,
- das Bild analysiert wird, um die Person zu authentifizieren.

## Claims

1. Biometric image acquisition assembly comprising:
- an illumination system for projecting light onto a target part (2) of an individual, said illumination system comprising a light source (1) configured so as to emit a light beam towards the target part (2) in an illumination direction, said light beam having a spatial distribution of the light intensity thereof,
- an image sensor (6) configured so as to acquire images of a target illuminated by the illumination system,
- processing means (7) comprising a processor for analysing the images,
**characterised in that** the illumination system comprises a compensation filter (5) disposed in the illumination direction (3) and suitable for compensating the spatial distribution of the light intensity emitted by the light source (1) towards the target part (2) wherein the compensation filter (5) has a transparency with a spatial distribution that is inverted relative to the spatial distribution of the light intensity at the light beam emitted by the light source (1), such that the intensity of the light beam is homogenised by the passage thereof via the compensation filter (5).

2. Assembly according to the preceding claim, wherein the spatial distribution of the transparency of the compensation filter (5) is produced by means of a pattern of tones modifying the transparency of the compensation filter (5).

3. Assembly according to the preceding claim, wherein the pattern of tones of the compensation filter (5) is etched by photolithography.

4. Assembly according to one of the preceding claims, wherein the light source (1) is a coherent or non-coherent monochromatic source.

5. Use of an assembly according to any one of claims 1 to 4 for a biometric method for detecting fraud or for authenticating or identifying an individual, wherein:
- a target part (2) of an individual is illuminated by means of the illumination system,
- an image of said target part (2) thus illuminated is acquired,
- the image is analysed to authenticate the individual.
